# EUROPÄISCHE PATENTSCHRIFT

(11) **EP 2 106 939 B1**
(45) Veröffentlichungstag und Bekanntmachung des Hinweises auf die Patenterteilung: **25.09.2013**
(21) Anmeldenummer: 09002914.1
(22) Anmeldetag: 28.02.2009
(51) Int. Cl.: B60P 3/00, B60H 1/00, F41H 7/03

(54) **System für die Belüftung innerhalb eines geschützten Untersuchungsfahrzeugs mit einer, kontaminierte Proben aufnehmenden Räumlichkeit**
System for ventilating inside a protected test vehicle with an area for carrying contaminated probes
Système d'aération à l'intérieur d'un véhicule d'examen protégé ayant un local recevant des échantillons contaminés

(30) Priorität: 01.04.2008 DE 102008016844
(43) Veröffentlichungstag der Anmeldung: 07.10.2009
(73) Patentinhaber: Rheinmetall Landsysteme GmbH, 24107 Kiel (DE)
(72) Erfinder: Tschirch-Otte, Michael, 34123 Kassel (DE); Stulgies, Baldur, Dr., 34359 Reinhardshagen (DE)
(74) Vertreter: Dietrich, Barbara

(56) Entgegenhaltungen:
- EP-A- 2 042 814
- EP-A- 2 043 108
- DE-A1-102005 031 719
- DE-U- 7 421 285

## Beschreibung

Ein Untersuchungsfahrzeug mit einem System für die Belüftung gemäß Oberbegriff des Anspruchs 1 ist in der EP 1 319 918 B1 beschrieben. Hier werden die aufgenommenen Proben in einer Analysekammer, beispielsweise einer Glove-Box, durch eine Fahrzeugbesatzung aus einem geschützten Raum heraus behandelt und analysiert.

Die Nutzung einer Druckluft-Schutzanlage sieht auch die CH 443 031 vor. Diese dient dazu, den Fahrzeugraum mit atembarer und im Fahrzeuginnenraum einen Überdruck erzeugenden Luft zu versorgen.

Ein Ventil zur Steuerung des Luftdruckes innerhalb eines geschützten Raums, der durch Wandflächen begrenzt wird, ist der DE 60 2004 001 056 T2 (EP 1 443 284 B1) entnehmbar. Das dabei verwendete Klappenventil ist in einem Fenster eines geschützten Raumes installiert und dient dazu, übermäßigen Druck durch das Fenster aus dem schadstofffreien Bereich in die kontaminierte Umgebung abzulassen.

Eine Anlage zur Regulierung der Umgebungsluft zeichnet die DE 699 31 090 T2 (EP 0 935 102 B1) auf. Zur Bereitstellung einer durchgehenden Versorgung mit sauberer Luft mit einer gewünschten Temperatur für die Mannschaftsmitglieder eines Kampffahrzeuges wird ein PSA-System (Druckwechsel-Adsorptionssystem) verwendet. Dieses beinhaltet Filter, die mit einem Adsorptionsmittel-Material gefüllt sind, das Gase unter Druck adsorbiert und Gase desorbiert, sobald der Druck entfernt ist.

Die vorgenannten Lösungen gehen somit von der Einbindung zusätzlicher Komponenten aus. Sie befinden sich im stationären Betrieb. Der Platzbedarf, der Energieaufwand sowie Gewichtsprobleme erweisen sich als unflexibel.

Die Erfindung stellt sich die Aufgabe, einen sicheren Betrieb eines insbesondere mobilen Untersuchungsfahrzeugs mit Sicherheitsarbeitsplatz bzw. -plätzen in Bezug auf die Belüftung des Personenaufenthaltsraumes unter Schutzluftbedingungen mit einfachen Mitteln zu gewährleisten.

Gelöst wird die Aufgabe durch die Merkmale des Patentanspruchs 1. Vorteilhafte Ausgestaltungen sind in den Unteransprüchen aufgezeigt.

Der Erfindung liegt die Idee zugrunde, den sicheren Betrieb mittels eines selbstständigen Aufbaus einer Druckkaskade zwischen einem Fahrzeuginnenraum, den Arbeitsplätzen und der Umgebung zu realisieren, wobei nicht jeder Arbeitsraum durch ein eigenes Stützgebläse abgesaugt wird.

Der Aufbau der Druckkaskade erfolgt vorzugsweise durch Nutzung einer fahrzeug- oder objekteigenen ABC-Schutzanlage. Speziell genutzt werden dazu der Überdruckaufbau und der fördernde Volumenstrom der ABC- Schutzanlage des Fahrzeuges (Objektes, Labors etc.), wobei mit abfallendem Überdruck zur Außenluft vom Mannschaftsraum oder Innenraum über eine, kontaminierte Proben aufnehmende Räumlichkeit, wie beispielsweise einer Glove-Box (siehe auch http://www.gloveboxes.com ) bzw. Isolator zur Umgebung die Kaskade aufgebaut wird.

Ein nicht erfindungsgemäßes Einstellen der Druckdifferenzen kann durch Einsatz von Überdruckventilen mit vor oder nach geschalteten Filterelementen (Schwebstofffilter) erfolgen, um so ein Eindringen kontaminierter Luft zu vermeiden. Diese Filterelemente werden vorzugsweise differenzdrucküberwacht.

Das Prinzip der Druckkaskade besteht darin, dass ein innerer Überdruck zur Umgebung die/den Bediener im Fahrzeug oder dergleichen vor dem Eindringen von Kontamination schützt. Dieses Prinzip des selbstständigen Aufbaus der Druckkaskade kann auf Untersuchungsfahrzeuge, worunter hier auch mobile Labore etc. verstanden werden, mit oder ohne eine Personenschleuse angewendet werden.

Die Druckkaskade wird in einem ersten Beispiel ohne Personenschleuse im so genannten Schutzprinzip - dem Arbeitsbetrieb und dem Transferbetrieb - betrieben. Der Überdruck wird im Einschleus- als auch Arbeitsbetrieb durch ein ABC-Schutzluftgebläse aufrecht gehalten.

Im Einschleusbetrieb herrscht stets ein Unterdruck der Räumlichkeit / Glove-Box gegen den Innenraum des Fahrzeuges etc. bei andauernder Durchströmung. Die Luft entweicht aus dem Mannschafts- bzw. Innenraum über ein Überdruckventil und einem Zuluftfilter in die Glove-Box und danach durch das Fahrzeugheck und die Schleusentür nach außen. Weiterhin kann Luft während der Einschleusung von Proben über ein fahrzeugeigenes Überdruckventil in die Umgebung entweichen, wenn die durch die ABC-Schutzanlage geförderte Luft nicht komplett über die Glove-Box an die Umgebung abgegeben wird.

Befindet sich das System hingegen nicht im Einschleusenbetrieb sondern im Arbeitsbetrieb, besteht eine Druckkaskade vom Mannschaftsraum über die Glove-Box nach außen. In diesem Betriebszustand ist die Schleusentür geschlossen. Im Arbeitsbetrieb wird die Druckkaskade durch ein weiteres Überdruckventil aufrechterhalten, durch welches die Luft druckverlustbehaftet von der Glove-Box an die Umgebung mit vorgeschaltetem Filter abgegeben wird.

Die Positionierung der Zuluftöffnung in die Glove-Box und der Abluftöffnung aus der Glove-Box ist so gewählt, dass eine diagonale Durchströmung der Glove-Box gewährleistet wird.

Es wird somit eine Druckkaskade zwischen einem Innenraum zur Aufnahme einer Besatzung etc., einer, die kontaminierten Proben aufnehmenden Räumlichkeit sowie einer Umgebung aufgebaut, dadurch, dass ein Zuluftgebläse im Innenraum (2) einen inneren Überdruck zur Umgebung schafft und in der Räumlichkeit gegenüber dem Innenraum ein Unterdruck vorhanden ist bzw. geschaffen wird, wozu zwischen dem Innenraum und der Räumlichkeit sowie zwischen der Räumlichkeit Überdruckventile und Filter eingebunden, so dass über diese zumindest im Arbeitsbetrieb die Zu- und Abluft innerhalb der Räumlichkeit reguliert werden.

Durch das Wirkprinzip der Überdruckventile der Zu- und Abluft der Glove-Box entsteht innerhalb dieser ein Druckgradient relativ zum Mannschaftsraum. Die Druckdifferenz von der Box zur Außenluft besteht durch den Überdruck in der Box und dem Umgebungsdruck. Die Luft, welche die Box durchströmt, wird bei Eintritt und Austritt gefiltert, um die Probenanalysen nicht durch unangepasste Luftqualität zu verfälschen, sowie die Umgebung vor Kontamination zu schützen. Vor dem Einschleusen der Proben besteht die Möglichkeit der Dekontamination des Innenraumes der Box, um ein Entweichen von Schadstoffen für die Umgebung wegen fehlender Abluftfiltrierung im Schleusenbetrieb zu vermeiden.

Es wird somit ein Arbeitsplatzbelüftungskonzept ohne eigene Abluftförderung beispielhaft gezeigt, bei welchem der Vorteil insbesondere in der Nutzung von vorhandenen fahrzeugspezifischen Komponenten liegt. Mit einem derartigen Konzept wird mit geringer Abluftmenge viel Schutz erreicht. Die Druckstufung dient zudem zur Spülung der Departements.

Selbiges Konzept kann auch als Schutzbelüftung für mobile Labore mit zwei (oder mehreren) lufttechnisch getrennten Sicherheitsarbeitsplätzen (Laminar - Flow -Feld/ Glove Box) eingesetzt werden.

Unter ABC- Schutzbedingungen wird in einer weiteren Variante ein sicherer Betrieb mit der Möglichkeit der Probeentnahmen vor Ort durch Personen gewährleistet, wenn eine Mehrweg- Personenschleuse vorhanden ist. Der Materialtransfer von der Fahrzeugumgebung in die Sicherheitsarbeitsplätze erfolgt hierbei über eine Materialschleuse, aus welcher die Proben in den jeweiligen Arbeitsplatz eingebracht werden können. Dies erfolgt gleichfalls unter einer Druckkaskade und mittels gerichteten Luftströmungen. Der sichere Betrieb wird somit auch durch gezielte Luftströmungen aufgrund des Überdruckaufbaus durch die nach geschalteten Räume erreicht.

Bei allen Beispielen werden durch den einstellbaren Überdruck im Fahrzeugraum die Bediener im Fahrzeug zur Umgebung vor dem Eindringen von Kontamination geschützt, der Überdruck im Fahrzeug durch eine ABC- Schutzanlage aufrechterhalten. Die Luft aus dem Fahrzeuginnenraum bzw. dem Mannschaftsraum entweicht jeweils über wenigstens ein Überdruckventil, beispielsweise im Dach, bei Normalbetrieb. Bei Betrieb mit der Personenschleuse wird insbesondere das Ventil im Heckbereich aktiv.

Anhand eines Ausführungsbeispiels mit Zeichnung soll die Erfindung näher erläutert werden.

Es zeigt:
- Fig. 1: ein nicht erfindungsgemäßes Belüftungskonzept im Normalbetrieb;
- Fig. 2: ein nicht erfindungsgemäßes Belüftungskonzept im Transferbetrieb:
- Fig. 3: ein erfindungsgemäßes Belüftungskonzept für ein Labor mit wenigstens zwei getrennten Sicherheitsarbeitsplätzen;
- Fig. 4: ein erfindungsgemäßes Belüftungskonzept für ein Labor mit Personenschleuse.

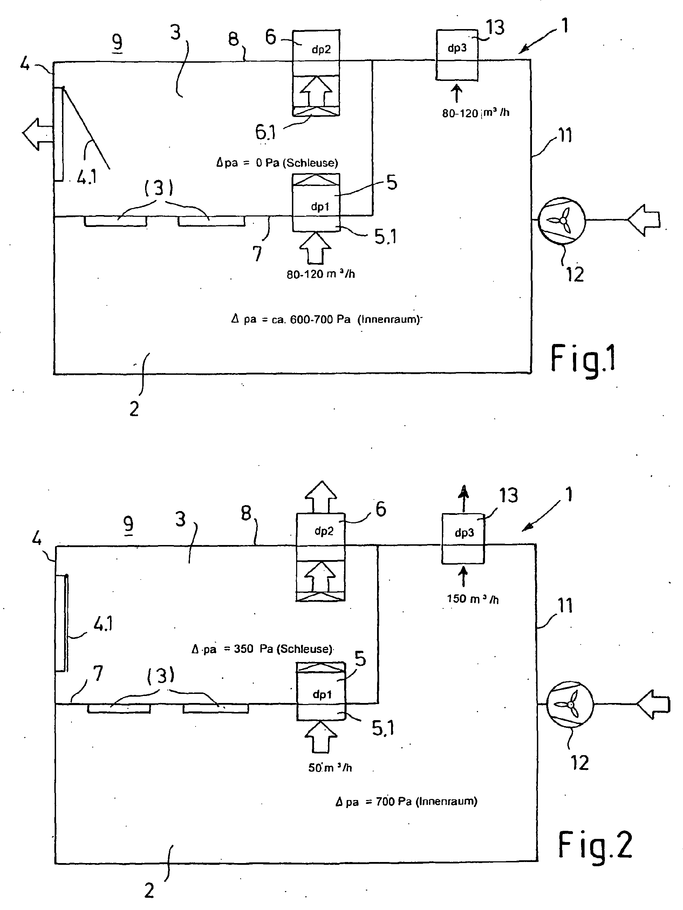

Fig. 1 sowie Fig. 2 zeigen ein beispielsweise mobiles Labor 1 oder dergleichen Untersuchungseinrichtung (stilisiert) mit einem Mannschaft- bzw. Fahrzeuginnenraum 2 für eine nicht näher dargestellte Mannschaft, einer vom Mannschaftsraum 2 getrennten Analysekammer 3 (eine Art Glove-Box), die ihrerseits über ein Fahrzeugheck 4 mit Schleusentür 4.1 Proben eingeschleust bekommt. Der Fahrzeuginnenraum 2 ist ABC-dicht von der Kammer 3 abgeschottet.

Mit 5 bzw. 6 sind so genannte Überdruckventile gekennzeichnet, die Zuluft- oder Schwebstofffilter 5.1, 6.1 (Filterklasse nach DIN - HEPA- Filter, mit vorzugsweise v = 80 - 120 m³/h) vor bzw. nachgeschaltet und Bestandteil einer Druckkaskade 10 sind und in einer Wand 7 zwischen dem Fahrzeuginnenraum 2 und der Box 3 bzw. in einer Wand 8 zwischen der Box 3 und der Umgebung 9 eingebunden sind. Die Überdruckventile 5, 6 sind dabei differenzdrucküberwacht.

In der Wand 11 zwischen dem Fahrzeuginnenraum 2 und der Umgebung 9 ist ein Zulufgebläse 12 (mit vorzugsweise v = 200 m³/h) sowie ein weiteres Überdruckventil 13 integriert. Das Zuluftgebläse 12 kann dabei Bestandteil einer nicht näher dargestellten, vorzugsweise fahrzeugeigenen ABC-Schutzanlage mit Schwebstoff- und Gasfilter sein.

### Das Belüftungskonzept sieht dabei wie folgt aus:

Im Fahrzeuginnenraum 2 wird ein innerer Überdruck von ca. 700 Pa zur Umgebung 9 geschaffen, wodurch die Besatzung beispielsweise vor Eindringen von Kontamination geschützt wird. Dieser Überdruck wird durch das Zuluftgebläse 12 aufrechterhalten. Gleichzeitig herrscht gegenüber dem Fahrzeuginnenraum 2 stets ein Unterdruck von ca. 350 Pa in der Glove-Box 3 bei andauernder Durchströmung.
I. Normal- bzw. Arbeitsbetrieb
   Befindet sich das System im Arbeitsbetrieb, besteht eine Druckkaskade 10 vom Fahrzeuginnenraum 2 (beispielsweise 750 Pa) über die Box 3 (beispielsweise 350 Pa) nach außen (= 0 Pa). Den Überdruck von 700 Pa zur Umgebung 9 erzeugt auch hierbei das Zuluftgebläse 12, die Schleusentür 4.1 ist geschlossen. Die Druckkaskade 10 wird in diesem Fall durch das Überdruckventile 5 und das weitere Überdruckventil 6 aufrechterhalten, durch welches letztlich die Luft druckverlustbehaftet von der Box 3 an die Umgebung 9 mit vorgeschaltetem Filter 6.1 abgegeben wird. Die Positionierung der Zuluftöffnung (5) in die Box und die Abluftöffnung (6) von der Box 3 ist vorzugsweise so gewählt, dass eine diagonale Durchströmung der Box 3 gewährleistet ist.
II. Transferbetrieb / Einschleusung der Proben
   Die Luft entweicht hierbei aus dem Fahrzeuginnenraum 2 über das Überdruckventil 5 bzw. über den Zuluftfilter 5.1 als Druckverlustkomponente im Falle der Einschleusung von Proben (nicht dargestellt) in die Box 3 und von dort durch das Fahrzeugheck 4 und die Schleusentür 4.1 nach außen. Weiterhin kann die Luft in der Praxis während der Einschleusung von Proben über das fahrzeugeigene Überdruckventil 13 in die Umgebung 9 entweichen, wenn die durch das Zuluftgebläse 12 geförderte Luft nicht komplett über die Box 3 an die Umgebung 9 abgegeben wird. Der Differenzdruck im Fahrzeuginnenraum 2 fällt von 700 Pa auf minimal 600 Pa, der in der Box von 600 Pa auf 0 Pa.

Durch dieses Wirkprinzip der Überdruckventile 5, 6 der Zu- und Abluft der Box 3 entsteht innerhalb der Box 3 ein Druckgradient relativ zum Fahrzeuginnenraum 2 von ca. 350 Pa. Die Druckdifferenz von der Box zur Außenluft (Umgebung 9) besteht durch den Überdruck in der Box 3 und dem Umgebungsdruck.

Die Luft, welche die Box 3 durchströmt, kann bei Eintritt und Austritt vorzugsweise gefiltert werden, um die Probenanalyse nicht durch unangepasste Luftqualität zu verfälschen.

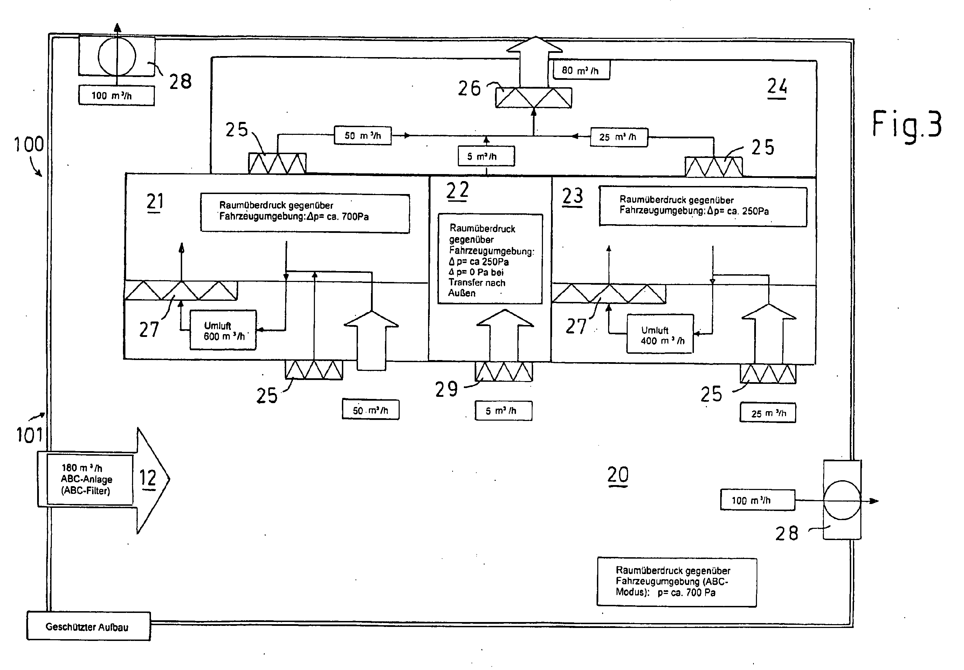

Fig. 3 zeigt ein erfindungsgemäßes Belüftungskonzept für ein Labor- bzw. Fahrzeuginnenraum 20 mit beispielsweise zwei getrennten Sicherheitsarbeitsplätzen 21, 23. Zwischen beiden befindet sich eine Material- Transfer- Schleuse 22, in welche die zu untersuchenden Proben (nicht näher dargestellt) von außen eingebracht werden können. Der Sicherheitsarbeitsplatz 21 ist hierbei beispielsweise ein Laminar- Flow - Feld (LLF), in der Regel ein offener Arbeitsplatz, kann aber auch wie der zweite Sicherheitsarbeitsplatz 23 eine Glove Box sein. Zwischen dem Fahrzeuginnenraum 20 und den Arbeitsplätzen 21, 23 sowie den Arbeitsplätzen 21, 23 und der Umgebung sind Filter 25, beispielsweise HEPA- Filter, sowie wenigstens ein Gasfilter 26 oder auch ein HEPA- Filter in den Wänden platziert. Die beiden Filter 25 zwischen den Arbeitsplätzen und der Umwelt sind in der Wand einem so genannten Glove- Box - Technikraum 24. Ein weiterer Filter 27, gleichfalls ein HEPA- Filter, ist in der Glove- Box 23 eingebunden für das Filtern beim Spülen der Glove- Box 23. Der Technikraum 24 besitzt zur Umgebung hin ein dem Filter 26 nachgeschaltetes Absauggebläse (nicht weiter dargestellt). Mit 28 sind zwei Überdruckfilter in der Außenwand des Fahrzeugs eingebunden, mit 29 ein weiterer Filter (HEPA- Filter) zwischen dem Fahrzeuginnenraum 20 und der Schleuse 22.

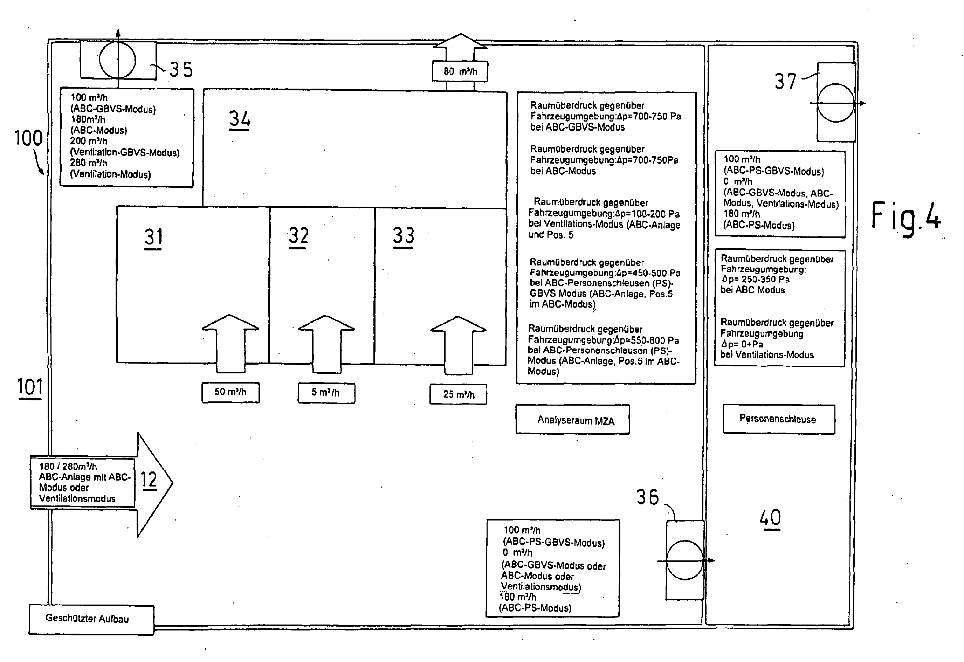

Eine in Fig. 4 aufgezeigte erfindungsgemäße Variante, bezieht eine Personenschleuse 40 mit ein. Die mit 31, 32 und 33 gekennzeichneten Arbeitsplätze sind auch hier beispielsweise ein LLF, eine Materialschleuse sowie eine Glove -Box. Der innere Aufbau (Anordnung der Filter) ist identisch mit dem aus Fig. 3. Auch diese Plätze sind mit einem so genannten Glove- Box- Technikraum 34, in dem sich das Absauggebläse befindet, belüftungstechnisch verbunden. Ein Überdruckventil 35 ist beispielsweise im Dach des Analyseraumes bzw. Fahrzeuginnenraum 30 eingebunden, ein Überdruckventil 36 in der Hecktür des Analyseraumes 30. In der Personenschleuse 40 ist zusätzlich eine Rückschlagklappe 37 integriert.

In dieser Variante erfolgt zudem eine Regulierung der Luftmenge im System bei Beachtung des Arbeitsmodus. Wird das System im so genannten ABC - GBVS (Gloveboxverbundsystem) -Modus betrieben, ist weniger Zuluft aus dem System zu transportieren, im vorliegenden Modus werden beispielsweise nur 100 m³ /h aus dem System an die Umgebung 101 abgegeben. Im normalen ABC- Modus sind es 180 m³/ h, bei Ventilation im GBVS- Modus beispielsweise 200m³/h und bei einfacher Ventilation 280 m³/h.

Wird eine Personenschleuse (PS) eingebunden, kann die Luftregulierung unter Beachtung der Personenschleuse erfolgten. Beim ABC -GBVS - Modus werden 100 m³/h aus dem System ausgebracht, beim ABC -PS- Modus 180m/ h, bei den anderen 0.

Beide Belüftungskonzepte basieren auch auf dem Aufbau einer Druckkaskade 100 zwischen dem Analyseraum 20, 30 sowie den Boxen bzw. Arbeitsplätzen mit der Umgebung 101, die in der Regel verseucht ist. Die Boxen bzw. Arbeitsplätze sind dazu mit der Außenwand des Labors oder Fahrzeuges etc. belüftungstechnisch verknüpft. Absauggebläse im Technikraum 24, 34 dienen dazu einen Unterdruck einzustellen als Schutz gegen den Fahrzeuginnenraum 20, 30, um so Rückströmungen zu verhindern.

Bei einem Systemausfall, wodurch die Druckkaskade abfallen würde, da ein Überdruck nicht gewährleistet wird, dient das Absauggebläse dazu, eine Druckdifferenz zwischen den Arbeitsplätzen und dem Fahrzeuginnenraum aufrecht zu erhalten. Dazu wird das Drucksystem bzw. der Luftstrom gemessen.

Um Kreuzkontaminationen insbesondere innerhalb der Glov- Box 23, 33 zu vermeiden, wird die Luftzirkulation in der Glove- Box derart vorgenommen, dass bei Umluft vom Arbeitstisch (nicht näher dargestellt) weg nach unten über einen Luftkanal nach oben geführt wird.

Es versteht sich, dass dieses Prinzip nicht nur bei mobilen Laboren oder dergleichen Anwendung findet. Vielmehr kann dieses Prinzip auch bei stationären Objekten verwendet werden.

## Patentansprüche

1. System für die Balüftung innerhalb eines geschützten Untersuchungsfahrzeuges (1) oder dergleichen mit wenigstens einer kontaminierte Proben aufnehmenden Räumlichkeit (22, 23, 32, 33) oder offenen Arbelteräumen (21, 31) sowie einem von diesen Räumlichkeiten (21, 22, 23, 31, 32, 33) abgeschotteten Innenraum (20, 30) zur sicheren Aufnahme einer Besatzung, wobei in eine der Räumlichkeiten (22) die zu untersuchenden Proben von außen eingebracht werden können, **gekennzeichnet durch** eine Druckkaskade (100) zwischen dem Fahrzeuginnenraum (20, 30) sowie den Räumlichkeiten (21, 22, 23, 31, 32, 33) mit der Umgebung (101) **durch** ein Zuluftgebläse (12), Filter (25, 26, 29) zwischen dem Fahrzeuginnenraum (20, 30), den Räumlichkeiten (21, 22, 23, 31, 32, 33) und der Umgebung (101) sowie einem Absauggebläse zur Umwelt (101).

2. System nach Anspruch 1, **dadurch gekennzeichnet, dass** das Zuluftgebläse (12) Teil einer ABC-Schutzanlage ist.

3. System nach Anspruch 1 oder 2, **dadurch gekennzeichnet, dass** zwischen zwei beispielsweise getrennten Sicherheitsarbeltsplätzen (21, 23) sich eine Material-Transfer-Schleuse (22) befindet, in welche die zu untersuchenden Proben von außen eingebracht werden können.

4. System nach einem der Ansprüche 1 bis 3, **dadurch gekennzeichnet, dass** der Sicherheitsarbeitsplatz (21) hierbei beispielsweise ein Laminar-Flow-Feld (LLF) ist, in der Regel ein offener Arbeitsplatz, wie auch der zweite Sicherheitsarbeitsplatz (23) eine Glove-Box sein kann.

5. System nach einem der Anspruche 1 bis 4, **dadurch gekennzeichnet, dass** die zwischen dem Fahrzeuginnenraum (20) und den Arbeitsplätzen (21, 23) sowie den Arbeitsplätzen (21, 23) und der Umgebung eingebundenen Filter (25), beispielsweise HEPA-Filter sind, und wie der wenigstens eine Gasfilter (26) oder auch HEPA-Filter In den Wänden platziert Ist.

6. System nach Anspruch 5, **dadurch gekennzeichnet, dass** die beiden Filter (25) zwischen den Arbeitsplätzen und der Umwelt In der Wand einem so genannten Glove-Box-Technikraum (24) platziert sind.

7. System nach einem der Ansprüche 1 bis 6, **dadurch gekennzeichnet, dass** ein weitere Filter (27), gleichfalls ein HEPA-Filter, in der Glove-Box (23) für das Filtern beim Spülen der Glove-Box (23) eingebunden ist.

8. System nach einem der Ansprüche 1 bis 7, **dadurch gekennzeichnet, dass** das Absauggebläse im Technikraum (24) zur Umgebung hin eingebunden ist und dem Filter (26) nachgeschaltet ist.

9. System nach einem der Ansprüche 1 bis 8, **dadurch gekennzeichnet, dass** zwei Überdruckfilter (28) In der Außenwand des Fahrzeugs eingebunden sind und ein weiterer Filter (29), ein HEPA-Filter, zwischen dem Fahrzeuginnenraum (20) und einer Schleuse (22).

10. System nach einem der Ansprüche 1 bis 9, **dadurch gekennzeichnet, dass** bei einem Systemausfall, wodurch die Druckkaskade abfallen würde, da ein Überdruck nicht gewährleistet wird, das Absauggebläse dazu dient, eine Druckdifferent zwischen den Arbeitsplätzen (21, 23) und dem Fahrzeuginnenraum (20) aufrecht zu erhalten.

11. System nach Anspruch 10, **dadurch gekennzeichnet, dass** das Drucksystem bzw. der Luftstrom gemessen wird.

12. System nach einem der Anspruche 1 bis 11, **dadurch gekennzeichnet, dass**, um Kreuzkontaminationen insbesondere innerhalb der Glove-Box (23, 33) zu vermeiden, die Luftzirkulation in der Glove-Box derart vorgenommen wird, dass bei Umluft die Luft vom Arbeitstisch weg nach unten über einen Luftkanal nach oben geführt wird.

## Claims

1. System for ventilating inside a protected test vehicle (1) or the like with at least one area (22, 23, 32, 33) for carrying contaminated samples or open working areas (21, 31), as well as an interior (20, 30) which is partitioned off from these areas (21, 22, 23, 31, 32, 33) and has the purpose of safely accommodating a crew, wherein the samples which are to be investigated can be introduced into one of the areas (22) from the outside, **characterized by** a pressure cascade (100) between the interior (20, 30) of the vehicle and the areas (21, 22, 23, 31, 32, 33) with the surroundings (101) by means of an incoming air blower (12), filters (25, 28, 29) between the interior (20, 30) of the vehicle, the areas (21, 22, 23, 31, 32, 33) and the surroundings (101) as well as an extraction blower leading into the environment (101).

2. System according to Claim 1, **characterized in that** the incoming air blower (12) is part of an ABC protection system.

3. System according to Claim 1 or 2, **characterized in that** a material transfer airlock (22) is located between two, for example, separate safety workstations (21, 23), into which airlock the samples to be investigated can be introduced from the outside.

4. System according to one of Claims 1 to 3, **characterized in that** the safety workstation (21) is here, for example, a laminar flow field (LLF), as a rule an open workstation, just as the second safety workstation (23) can also be a glove box.

5. System according to one of Claims 1 to 4, **characterized in that** the filters (25) which are integrated between the interior (20) of the vehicle and the workstations (21, 23) as well as the workstations (21, 23) and the surroundings are, for example, HEPA filters and are positioned in the walls, as is the at least one gas filter (26) or else the HEPA filter.

6. System according to Claim 5, **characterized in that** the two filters (25) are positioned between the workstations and the environment in the wall of what is referred to as a glove box technical space (24).

7. System according to one of Claims 1 to 6, **characterized in that** a further filter (27), likewise a HEPA filter, is integrated into the glove box (23) for filtering while rinsing the glove box (23).

8. System according to one of Claims 1 to 7, **characterized in that** the extraction blower is integrated into the technical space (24) leading into the surroundings and is connected downstream of the filter (26).

9. System according to one of Claims 1 to 8, **characterized in that** two overpressure filters (28) are integrated into the outer wall of the vehicle, and a further filter (29), a HEPA filter, is arranged between the interior (20) of the vehicle and an airlock (22).

10. System according to one of Claims 1 to 9, **characterized in that** in the event of a system failure as a result of which the pressure cascade would drop away since an overpressure is not ensured, the extraction blower serves to maintain a pressure difference between the workstations (21, 23) and the interior (20) of the vehicle.

11. System according to Claim 10, **characterized in that** the pressure system or the airstream is measured.

12. System according to one of Claims 1 to 11, **characterized in that** in order to avoid cross-contamination, in particular within the glove box (23, 33), the air circulation in the glove box is carried out in such a way that in the case of circulating air the air is guided downwards away from the desk and upward via an air duct.

## Revendications

1. Système pour l'aération à l'intérieur d'un véhicule d'examen protégé (1) ou analogue comportant au moins un local (22, 23, 32, 33) contenant des échantillons contaminés ou des chambres de travail ouvertes (21, 31) ainsi qu'un espace intérieur (20, 30) séparé de ces locaux (21, 22, 23, 31, 32, 33) destiné à accueillir en sécurité du personnel, dans lequel les échantillons à examiner peuvent être introduits de l'extérieur dans un des locaux (22), **caractérisé par** une cascade de pression (100) entre l'espace intérieur de véhicule (20, 30) ainsi que les locaux (21, 22, 23, 31, 32, 33) avec l'ambiance (101) au moyen d'une soufflante d'arrivée d'air (12), des filtres (25, 26, 29) entre l'espace intérieur de véhicule (20, 30), les locaux (21, 22, 23, 31, 32, 33) et l'ambiance (101) ainsi qu'une soufflante d'aspiration vers l'atmosphère (101).

2. Système selon la revendication 1, **caractérisé en ce que** la soufflante d'arrivé d'air (12) fait partie d'une installation de protection ABC.

3. Système selon la revendication 1 ou 2, **caractérisé en ce qu'**il se trouve entre deux postes de travail de sécurité par exemple séparés (21, 23) un sas de transfert de matière (22), dans lequel les échantillons à examiner peuvent être introduits de l'extérieur.

4. Système selon l'une quelconque des revendications 1 à 3, **caractérisé en ce que** le poste de travail de sécurité (21) est ici par exemple un champ à écoulement laminaire (LLF), en règle générale un poste de travail ouvert, tout comme le deuxième poste de travail de sécurité (23) peut être une boîte à gants.

5. Système selon l'une quelconque des revendications 1 à 4, **caractérisé en ce que** les filtres (25) installés entre l'espace intérieur de véhicule (20) et les postes de travail (21, 23) ainsi qu'entre les postes de travail (21, 23) et l'ambiance sont par exemple des filtres HEPA, et ledit au moins un filtre à gaz (26) ou aussi le filtre HEPA est placé dans les parois.

6. Système selon la revendication 5, **caractérisé en ce que** les deux filtres (25) entre les postes de travail et l'atmosphère sont placés dans une paroi d'une chambre technique dite boite à gants (24).

7. Système selon l'une quelconque des revendications 1 à 6, **caractérisé en ce qu'**un filtre supplémentaire (27), également un filtre HEPA, est installé dans la boîte à gants (23) pour la filtration lors du balayage de la boîte à gants (23).

8. Système selon l'une quelconque des revendications 1 à 7, **caractérisé en ce que** la soufflante d'aspiration est installée dans le local technique (24) en direction de l'ambiance et est placée en aval du filtre (26).

9. Système selon l'une quelconque des revendications 1 à 8, **caractérisé en ce que** deux filtres à surpression (28) sont installés dans la paroi extérieure du véhicule et un autre filtre (29), un filtre HEPA, est installé entre l'espace intérieur de véhicule (20) et un sas (22).

10. Système selon l'une quelconque des revendications 1 à 9, **caractérisé en ce que**, en cas de panne du système, qui entraînerait une perte de la cascade de pression parce qu'une surpression n'est plus garantie, la soufflante d'aspiration sert à maintenir un différentiel de pression entre les postes de travail (21, 23) et l'espace intérieur de véhicule (20).

11. Système selon la revendication 10, **caractérisé en ce que** le système de pression ou le flux d'air est mesuré.

12. Système selon l'une quelconque des revendications 1 à 11, **caractérisé en ce que**, pour éviter des contaminations croisées en particulier à l'intérieur de la boîte à gants (23, 33), la circulation de l'air dans la boîte à gants est effectuée de telle manière que, avec l'air de brassage, l'air soit conduit vers le bas au départ de la table de travail puis vers le haut par un canal d'air.
